Europäisches Patentamt

European Patent Office

Office européen des brevets

(19)

(11) Publication number: **0 023 369**
B1

# (12) EUROPEAN PATENT SPECIFICATION

(45) Date of publication of patent specification: 11.01.84

(21) Application number: 80200604.9

(22) Date of filing: 29.07.80

(51) Int. Cl.³: **A 01 D 17/10,**
**A 01 D 33/00**

(54) Tuber, bulb and root lifter.

(30) Priority: 30.07.79 NL 7905860

(43) Date of publication of application:
04.02.81 Bulletin 81/5

(45) Publication of the grant of the patent:
11.01.84 Bulletin 84/2

(84) Designated Contracting States:
AT BE CH DE FR GB IT LI LU NL SE

(56) References cited:
BE - A - 510 421
DE - A - 1 582 474
FR - A - 2 315 835
GB - A - 807 847
GB - A - 1 077 395
US - A - 2 897 900

(73) Proprietor: Machinefabriek J. de Jonge B.V.
No. 14, Cingeldijk
NL-4453 CN 's-Heerenhoek (NL)

(72) Inventor: de Jonge, Johannes
No.10, Werrilaan
's-Heerenhoek (NL)

(74) Representative: Hoijtink, Reinoud et al,
OCTROOIBUREAU ARNOLD & SIEDSMA
Isartorplatz 5
D-8000 München 2 (DE)

Courier Press, Leamington Spa, England.

## Tuber, bulb and root lifter

The invention relates to a multi-row lifter for tuber, bulb and root crops, particularly potatoes, comprising a ground-supported main frame, an auxiliary frame bearing pivotally on the main frame and on the ground, at least one sieve conveyor carried by the main frame, means for maintaining the sieve conveyor substantially in a horizontal position, viewed in a transverse direction, lifting shares carried by the auxiliary frame and a conveyor joining the lifting shares and passing, viewed in the direction of movement, at the front around a reversing roller carried by the auxiliary frame and at the rear around a horizontal driving roller carried by the main frame.

For harvesting potatoes it is important for the lifting shares and the associated conveyor to match the unevennesses of the field. These unevennesses may, on the one hand, be due to the difference in height of the rows of potatoes and, on the other hand, to natural slopes of the ground.

In the generally employed lifter constructions as disclosed for example in FR—A—2315835, the lifting shares are preceded by depth-control wheels also fastened to the auxiliary frame, in the case of potatoes, specifically termed diabolo rollers, which are vertically adjustable with respect to the shares, so that they can determine the thickness of the lifted layer of soil.

The more or less horizontal plane of movement of the shares and diabolo rollers is determined in these embodiments by the positions of the main frame, the wheel axis or the ground respectively.

The consequences thereof are:

a. in the case of a longitudinal slope of the field the thickness of the lifted layer remains constant,

b. in the case of a transverse slope of the same angle of inclination at the locations of the wheel axis and the shares the layer thickness remain constant, it is true, but since the overall lifter matches the conditions of the field, the potatoes will move towards one side of the conveyor and the further associated sieve belts, so that the sieving capacity and the removal of the haulm become inadequate.

c. in the case of a transverse slope having different angles of inclination at the locations of the wheel axis and the shares there is the drawback that the shares assume a slanting position to the ground so that either part of the crop is not harvested or the depth of the lifting shares becomes excessive, the amount of picked up earth to be sieved then being too large.

The invention has for its object to provide means enabling lifting on uneven soil with a transverse slope, whilst the lifting shares and the directly adjacent part of the conveyor follow the local transverse slope of the field and the further and major part of the conveyor as well as the further sieve belts of the lifter remain in horizontal positions.

According to the invention this is achieved in that the reversing roller is tiltable in a vertical plane in order to follow in use the ground profile, and the driving roller is movable with respect to the main frame, such as to maintain the spacing between the axes of the driving roller (28) and the reversing roller sustantially constant.

Each end of the shaft of the reversing roller may be coupled by means of a coupling rod with the corresponding end of the shaft of the driving roller.

These measures result in that in the case of a vertical displacement of one of the end parts of the reversing roller the corresponding end part of the driving roller can move in a substantially horizontal and in a vertical plane, whilst the distance between the rollers remains constant. Whilst, therefore, the part of the conveyor directly joining the lifting shares follows the ground profile despite a slope, if any, the further part of the conveyor remains substantially horizontal so that its sieving function is maintained throughout the width.

One end of the shaft of the reversing roller may be coupled through the auxiliary frame with the other end of said shaft in a manner such that during a movement in the vertical plane, said ends move in opposite senses.

The auxiliary frame preferably comprises on each side of the conveyor a longitudinal beam coupled with an end of the shaft of the reversing roller and having a guide member for preventing transverse movement of the coupling rod relative to the auxiliary frame, a lever system on each side of the conveyor coupled with the corresponding longitudinal beam for raising or lowering one longitudinal beam relative to the other one and a reversing mechanism connecting the lever system for equalising the vertical movement of the auxiliary frame relative to the main frame.

The whole auxiliary frame turns, in the case of a longitudinal slope, on a lever at the main frame and in the case of a transverse slope it moves about an imaginary axis located midway between the longitudinal beams of the auxiliary frame. At the front it is supported by vertical guides on the main frame.

The imaginary, longitudinal axis of the auxiliary frame located above the reversing roller brings about, during a rotary movement of the auxiliary frame, a lateral displacement of the reversing roller ends by describing a circular path. By guiding the coupling rods along the longitudinal beams of the auxiliary frame the driving roller is compelled to perform a movement in the opposite direction.

The invention will be explained with reference to an embodiment shown in the drawings.

The drawings show in

Figure 1 a perspective view of an embodiment of the invention and

Figure 2 an alternative embodiment.

The potato lifter according to the invention comprises a main frame 1 having longitudinal beams 2, 3 and 4, 5 as well as a transverse beam 6. The main frame bears by wheels 7, 8 on the ground and is constantly held in a horizontal position with the aid of a cylinder 36. With the main frame 1 is connected an auxiliary frame, which is adapted to turn by means of a shaft 9 with respect to the main frame, the transverse pivotal axis proper formed by the line of connection between the medium pivotal points of the lever arms 19, said auxiliary frame being furthermore adjustable in a direction of height with respect to the ground by setting the diabolo rollers 15 at a higher or lower level by means of the spindle 35. When no lifting work is done, the auxiliary frame can be elevated by means of the piston-cylinder combination 10, the lever member 11, the rotary shaft 12 and the extension member 13, which is omnidirectionally movable with respect to the auxiliary frame, for example, by means of a spherical hinge 14. The auxiliary frame comprises longitudinal beams 16 and 17, interconnected at one end by a transverse beam 18. At the foremost ends the longitudinal beams are laterally enclosed with respect to the main frame, for example, by vertical guides 37. The longitudinal beams 16 and 17 are each connected with a lever system, one system 19, 20 being fully shown. One end of the lever arms 19 is connected with an extension member 22 of the longitudinal beam 2 of the main frame 1. The end of the lever arm 20 remote from the lever arm 19 is connected through a reversing mechanism 21, 9, 23 with the leverage on the other side of the device. The auxiliary frame carries the reversing roller 26 of the conveyor 27 with the aid of the extension members 24 and 25. The coupling rods are enclosed, for example, with vertical-guides 38 approximately midway between the driving and reversing rollers in a lateral direction in the auxiliary frame. The driving roller 28 of the conveyor 27 is omni-directionally rotatable and connected with the longitudinal beams 4 and 5 of the main frame by means of the lever arms 29, 30. The conveyor 27 is joined by a conveyor 31. The lifting shares 32 are arranged near the reversing roller. The device moves in the direction of the arrow 33.

The device operates as follows. The lifting shares 32 penetrate into the soil over a distance determined by the depth-control mechanism 35 and lift a layer of earth containing potatoes. The layer arrives at the conveyor 27, where a sieving process is carried out during transport in the direction indicated by the arrow. The potatoes not passing the sieve pass to the conveyor 31 and are conducted away, usually after being further sieved and after the haulm is separated.

When a slope of the land is encountered in a direction transverse of the direction of movement and when the main frame is then set in horizontal position, a movement of the auxiliary frame is produced, in which the imaginary longitudinal axis is located centrally between the longitudinal beams 16, since these beams pivot at the leverage 19 and are laterally blocked between the guides 37. The end of the reversing roller connected with the extension piece 24 will, for example, move downwards in order to follow the ground. As a result the lever arm 20 also moves downwards, the shaft 9 performs a rotation in anticlockwise direction, the arm 23 moves upwards and hence also the longitudinal beam 17 and the end part of the reversing roller 26 connected therewith move upwards. Since the reversing roller 26 is coupled with the driving roller 28 on both sides of the conveyor by means of coupling rods, one of which (34) is shown, the distance between the reversing roller and the driving roller will remain constant and the driving roller will have to move in a substantially horizontal plane going approximately through the coupling rods 34 by means of the omnidirectionally pivotable lever arms 29, 30. The pattern of movements of the reversing roller and the driving roller can be resumed as follows:

1. Vertical movements of the shaft ends of the reversing roller are converted into longitudinal movements of the driving roller ends by the mutual coupling of the coupling rods 34.

2. Lateral movements of the shaft ends of the reversing roller are converted via the guides 38 into a transverse movement in the opposite direction of the shaft ends of the driving roller.

As a matter of course, both movements occur in conjunction.

During the movement of the endless conveyor around the reversing roller 26 and the driving roller 28 the conveyor belt will be in an inclined position near the reversing roller 26, but during the movement towards the driving roller 28 it will gradually return to a horizontal position so that the purpose of the invention is achieved, whilst owing to the effect of the above-described movements neither length variations of the conveyor belt nor parallelogram-shaped deformations will occur as a result of which tracking or driving problems are not involved.

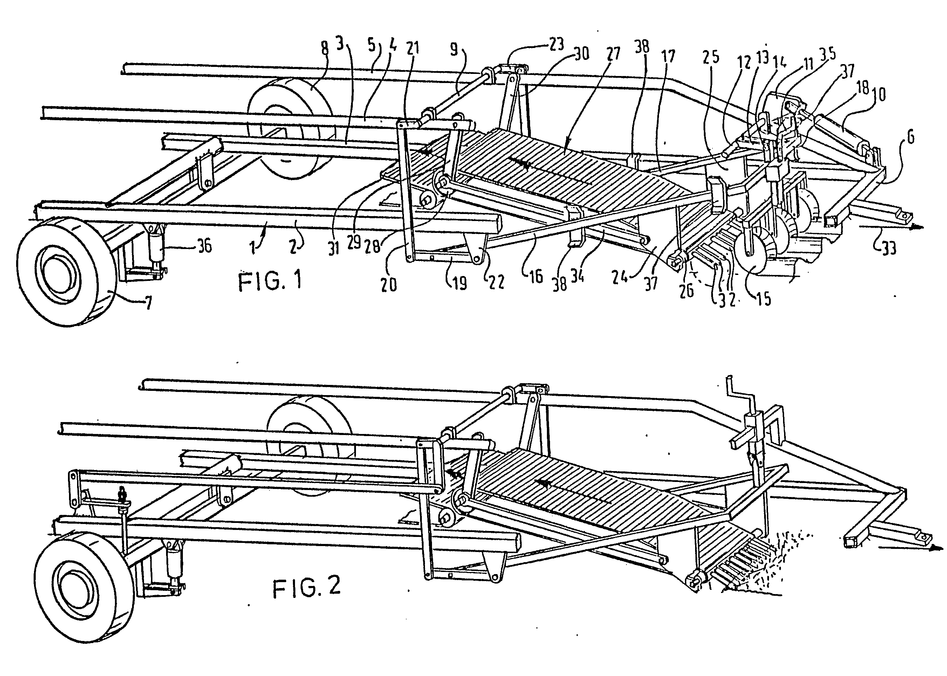

The embodiment shown in Figure 2 differs from that of Figure 1 in that with a main frame remaining horizontal the auxiliary frame with the shares can follow the slope in the event depth-control rollers cannot be used, so that the shares assumes the same slope in a transverse direction with respect to the main frame as the wheel axle.

To this end the wheel axis movement is transferred, for example, through a lever mechanism to the shaft 9, which commands the position of the auxiliary frame in the manner described above. The depth setting has then to be made from the main frame.

## Claims

1. A multi-row lifter for tuber, bulb and root crops, particularly potatoes, comprising a ground-supported main frame (1), an auxiliary frame bearing pivotally (9) on the main frame (1) and on the ground, at least one sieve conveyor carried by the main frame (1), means (36) for maintaining the sieve conveyor substantially in a horizontal position, viewed in a transverse direction, lifting shares (32) carried by the auxiliary frame, and a conveyor (27) joining the lifting shares (32) and passing, viewed in the direction of movement, at the front around a reversing roller (26) carried by the auxiliary frame and at the rear around a horizontal driving roller (28) carried by the main frame (1), characterized in that the reversing roller (26) is tiltable in a vertical plane in order to follow in use the ground profile, and the driving roller (28) is movable with respect to the main frame (1), such as to maintain the spacing between the axes of the driving roller (28) and the reversing roller (26) substantially constant.

2. A multi-row lifter as claimed in claim 1 characterized in that each end of the shaft of the reversing roller (26) is coupled by means of a coupling rod (34) with the corresponding end of the shaft of the driving roller (28).

3. A multi-row lifter as claimed in claims 1 and 2 characterized in that one end of the shaft of the reversing roller (26) is coupled (20, 9, 23, 17) via the auxiliary frame with the other end of said shaft in a manner such that during a movement in the vertical plane said ends move in opposite senses.

4. A multi-row potato lifter as claimed in claim 3 characterized in that the auxiliary frame comprises on each side of the conveyor (27) a longitudinal beam (16, 17) coupled with an end of the shaft of the reversing roller (26) and having a guide member (38) for preventing transverse movement of the coupling rod (34) relative to the auxiliary frame, a lever system (19, 20, 30) on each side of the conveyor (27) coupled with the corresponding longitudinal beam (16, 17) for raising or lowering one longitudinal beam relative to the other one, and a reversing mechanism (21, 19, 23) connecting the lever system (19) for equalising the vertical movement of the auxiliary frame relative to the main frame (1).

## Revendications

1. Ramasseuse multi-rangées pour la récolte des tubercules, des bulbes et des racines, en particulier des pommes de terre, comprenant un cadre principal (1) supporté par le sol, un cadre auxiliaire monté de manière pivotante sur le cadre principal (1) et supporté par le sol, au moins un convoyeur à crible supporté par le cadre principal (1), des moyens (36) pour maintenir le convoyeur à crible dans une position sensiblement horizontale, vu dans une direction transversale, des socs de ramassage (32) supportés par le cadre auxiliaire, et un convoyeur (27) rejoignant les socs de ramassage (32) et passant, en considérant la direction du déplacement, à l'avant autour d'un rouleau de renvoi (26) supporté par le cadre auxiliaire et à l'arrière autour d'un rouleau d'entraînement horizontal (28) supporté par le cadre principal (1), caractérisée en ce que le rouleau de renvoi (26) peut basculer dans un plan vertical afin de suivre, en fonctionnement, le profil du sol, et le rouleau d'entraînement (28) est mobile par rapport au cadre principal (1), de mainère à maintenir l'espacement entre les axes du rouleau d'entraînement (28) et du rouleau de renvoi (26) sensiblement constant.

2. Ramasseuse multi-rangées selon la revendication 1, caractérisée en ce que chaque extrémité de l'arbre du rouleau de renvoi (26) est reliée par l'intermédiaire d'une tige de liaison (34) à l'extrémité correspondante de l'arbre du rouleau d'entraînement (28).

3. Ramasseuse multi-rangées selon les revendications 1 et 2, caractérisée en ce que l'une des extrémités de l'arbre du rouleau de renvoi (26) est reliée (20, 9, 23, 17) par l'intermédiaire du cadre auxiliaire à l'autre extrémité de cet arbre, de telle manière que, pendant un déplacement dans le plan vertical, ces extrémités se déplacent dans des ses opposés.

4. Ramasseuse multi-rangées pour pommes de terre selon la revendication 3, caractérisée en ce que le cadre auxiliaire comprend de chaque côté du convoyeur (27) une poutre longitudinale (16, 17) reliée à une extrémité de l'arbre du rouleau de renvoi (26) et munie d'un organe de guidage (38) destiné à empêcher le déplacement transversal de la tige de liaison (34) par rapport au cadre auxiliaire, un système de levier (19, 20, 30) de chaque côté du convoyeur (27), relié à la poutre longitudinale correspondante (16, 17) pour soulever ou abaisser l'une des poutres longitudinales par rapport à l'autre, et un mécanisme inverseur (21, 19, 23) relié au système de levier (19) pour égaliser le déplacement vertical du cadre auxiliaire par rapport au cadre principal (1).

## Patentansprüche

1. Hubfördervorrichtung für mehrreihiges Ernten von Knollenfrüchten, Blumen-Zwiebeln und Wurzelknollen, insbesondere von Kartoffeln, bestehend aus einem vom Boden getragenen Hauptrahmen (1), einem mittels einer Welle (9) gelenkig gegenüber dem Hauptrahmen (1) sowie dem Boden abgestützten Hilfsrahmen, mit wenigstens einer vom Hauptrahmen (1) getragenen siebenden Fördereinrichtung und mit einer Einrichtung (z.B. 36) zum Halten der siebenden Fördereinrichtung in einer, in Querrichtung gesehen im wesentlichen horizontalen Lage, mit vom Hilfsrahmen getragenen Hubscharen (32) und mit einer Fördereinrichtung (27), die sich an die Hubscharen (32) anschließt und, in Bewegungsrichtung gesehen, vorne um eine vom Hilfsrahmen getragene Umkehrwalze (26) und hinten um eine vom Hauptrahmen (1) getragene Treibwalze (28) geführt ist, dadurch gekennzeichnet, daß die Umkehrwalze (26) in einer lotrechten Ebene schwenkbar ist, um während des Einsatzes dem Boden-Profil folgen zu können, und daß die Treibwalze (28) in Bezug auf den Hauptrahmen (1) bewegbar ist, um so den Abstand zwischen den Achsen der Treibwalze (28) und der Umkehrwalze (26) im wesentlichen konstant zu halten.

2. Hubfördervorrichtung nach Anspruch 1, dadurch gekennzeichnet, daß jedes Ende der Achswelle der Umkehrwalze (26) mittels einer Koppelstange (34) mit dem entsprechenden Ende der Achswelle der Treibwalze (28) verbunden ist.

3. Hubfördervorrichtung nach Ansprüchen 1 und 2, dadurch gekennzeichnet, daß ein Ende der Achswelle der Umkehrwalze (26) via den Hilfsrahmen mit dem anderen Ende dieser Achswelle in der Art gekoppelt (20, 9, 23, 17) ist, daß während einer Bewegung in der lotrechten Ebene diese Enden in entgegengesetzten Richtungen sich bewegen.

4. Hubfördervorrichtung für Kartoffeln nach Anspruch 3, dadurch gekennzeichnet, daß der Hilfsrahmen auf jeder Seite der Fördereinrichtung (27) je einen Langträger (16, 17) aufweist, der mit jeweils einem Ende der Achswelle der Umkehrwalze (26) gekoppelt und zum Verhindern von Querbewegungen der Koppelstange (34) relativ zum Hilfsrahmen mit je einer Führung (38) versehen ist, daß ein Hebelsystem (19, 20, 30) auf jeder Seite der Fördereinrichtung (27) mit dem entsprechenden Langträger (16, 17) gekoppelt ist, um den einen gegenüber dem anderen Langträger anzuheben oder abzusenken, und daß ein Umkehrmechanismus (21, 19, 23) das Hebelsystem (19) verbindet, um die lotrechte Bewegung des Hilfsrahmens in Bezug auf den Hauptrahmen (1) auszugleichen.

FIG. 1

FIG. 2

0023369